# EUROPEAN PATENT APPLICATION

(11) **EP 1 246 041 A1**
(43) Date of publication of application: **02.10.2002**
(21) Application number: 01107528.0
(22) Date of filing: 26.03.2001
(51) Int. Cl.: G06F 1/00

(54) **Method and system for controlling access to contents on a network server**

(71) Applicant: TRIC AB, 103 90 Stockholm (SE)
(72) Inventor: Aglander, Markus, 181 42 Lidingö (SE); Lövbrand, Anders, 114 37 Stockholm (SE)
(74) Representative: Franzén, Lars Hjalmar

(57) **Abstract**

The present invention relates to method and a system for controlling acces of a user, having been allocated an IP address from an Access Provider, to contents supplied by a content provider and stored on a server connected to a network such as the Internet. According to the invention, a list of predefined accepted IP addresses is stored on an administration server, and made available to the content provider via the network. Then, when a user requests information from the server, the allocated IP address is extracted (41) at the content provider server and it is determined if said extracted IP address is comprised in said list of IP addresses (42), in which case the user is granted access (43) to said contents.
By this method, the user's subscription with the Access Provider, or the Access Provider revenue as a whole, can be used as a way to charge the user (directly or indirectly) for the information contents, services or products he/she consumes.

## Description

### Technical field

The present invention relates to a method and a system for controlling access of a user, having been allocated an IP address from an Access Provider, such as an Internet Service Provider, to contents or services supplied by a content or service provider and stored on a server connected to a network such as the Internet.

### Technical background

Connection to the Internet is today provided by Internet Service Providers (ISP), from which individuals, associations of individuals or companies can acquire an IP address. The quality of the connection can be of different types; normally a company has a permanent connection, with a permanent allocated IP address, while an individual normally has a dial-up modem connection, in which case the individual is allocated a temporary IP address from a collection of IP addresses each time the connection is activated. New technologies are gaining ground, and many people now have access to wide band connections at home, or mobile Internet connections, e.g. GPRS, UMTS.

The motivation for people to access the Internet can be very individual, but in some way, it is the information stored in the ensemble of servers connected to the net that create a value for the person surfing the net. It is these contents that catch the interest of surfers, and it is the quality of these contents that is the decisive factor for maintaining the interest for the net.

In order to secure the quality of information contents, there needs to be some way for the content provider to earn a return on his investment in information. However, it is very difficult to successfully generate revenue on the net. See for example the article "Asian web firms slowly introduce service fees", WSJ Europe, 15 March, 2001. The few revenue models can be categorized in the following:
- Credit card, subscriptions or other forms of payment for the content. This solution requires that each user is identified and billed, thereby creating the need for each content provider to set up his own system for user administration and payment. Besides being difficult for an organization specialized in information providing, it also has a major detrimental effect on the interest of the user. The average Internet user does not particularly wish to be required to present an ID and a password several times during a surfing session. This model has so far only been truly successful for sites with pornographic contents.
- Sale of advertisements or sponsoring. Perhaps mostly associated with sale of banner space, this model requires high visitor rates, and preferably a good knowledge of the visitor population in order to increase the price of each sold banner. As the banner buyer normally pays for the number of visitors, there is no immediate reason to keep the surfer occupied at the site for any longer period, and the result is typically a site consisting of very shallow contents with little or no qualitative contents.
- Sale of goods or services. The sale of products over the net, often referred to as e-commerce, is of course a sound, but normally troublesome, way of making money on the Internet, and a way to generate added revenues, besides advertising, from a site attracting many visitors. Although the Internet stores may prove to be a successful business, it is, however, difficult to see how they will improve the quality of Internet contents. The attracting force of these sites is the product itself and the distribution thereof, and therefore the site contents has less importance, apart from providing an effective communication with the customer.

Thus, the majority of the information on the net is generally free to each and everyone, making it hard to attract providers of high quality information content. A category of successful (in number of visitors per day) sites on the Internet in Sweden today are the tabloid sites, which manage to attract a large number of visitors each days. Even though they sell banners, and thereby generate a certain amount of revenue, the Internet sites are not commercially successful by themselves, but rather a form of advertising investment in order to sell hard copies of the tabloid. As a result, the tabloid does not wish to improve the quality of the Internet site too much, as it might hurt the number of sold copies (people will have no need to buy the hardcopy if everything is said on the Internet). Typically, therefore, a tabloid site is just a collection of catching headlines.

The problem at hand is related to the content provider's lack of consumer or end-user contact. Without some type of login system or user identification, the provider of a site cannot in any easy way gain access to its users (viewers, customers). In practice, the only actor with such access on any larger scale, are the network access providers, e.g. the Internet Service Providers, typically the telecom companies and independent operators.

### Summary of the invention

An object of the present invention is to overcome the above stated problems, and to thereby provide a way to improve the quality of information contents on the Internet. Another object of the invention is to improve the service supplied by a network access provider to its users.

These and other objects are accomplished with a system and a method of the type mentioned by way of introduction, with the characteristics given in claims 1, 2 and 13.

According to the invention, a list of predefined accepted IP addresses is stored on an administration server, and made available to the content provider via the network. The allocated IP address is then extracted at the content provider server when a user requests information from the server, and it is determined if the extracted IP address is comprised in said list of IP addresses, in which case the user is granted access to said contents.

In this way, the administration server keeps track of which IP addresses should be granted access. The Access Provider can be responsible for allocating to a user an IP address comprised in the list, if and only if the user is entitled to this access. Alternatively, the Access Provider can inform the administration server of which IP addresses are allocated to users who are entitled to access. The content provider can then make use of the predefined list when determining if a user should have access to the contents.

By this method, the user's subscription with the Access Provider, or the Access Provider revenue as a whole, can be used as a way to charge the user (directly or indirectly) for the information contents, services or products he/she consumes. A number of content providers can have access to the administration server, and from this collection of content providers the Access Provider can select which ones its users should have access to. A user who considers the offered contents to be of value may choose to participate in the system, in which case the Access Provider charges the user for the service, and allocates the user an IP address that is comprised in the list, alternatively informs the administration server of what IP address that has been allocated, which can then be included in the list.

The supply of network contents may be different for different Access Providers, leading to a situation of competition between the Access Providers based on what contents they provide to their subscribers. The result is a situation where the Access Provider can be compared to a traditional cable TV operator, and the network contents supplied to the user corresponds to the TV channels offered by the cable TV operator.

As mentioned above, the user can be charged by the Access Provider, which already has the routines and systems for handling this process. The administration server can advantageously be handled by an intermediate party, providing the contact between the content providers and the Access Provider. This can be advantageous to all parties, as there will be a large number of relationships between such entities. The intermediate party will charge the Access Providers for participating in the system, i.e. to be able to offer their users access to the participating content providers. The intermediate party will then distribute a share, for example in the order of 90 %, of these charges to the content providers, preferably according to their relative part of the total Internet traffic.

In one arrangement, a user is charged a fixed fee, and the fees are divided between the Access Provider and the content provider, much like in the cable TV example. Another possibility is to charge the user on a "per use"-basis, monitoring the number of visits and their duration for each participating content provider server. The specific information contents may of course also influence the fee, for example access to copyright protected material such as music or film can be charged extra.

According to another aspect of the invention, the client is provided with means for communicating the presently allocated IP address to the administration server. In this case, the client will be billed, preferably from the proprietor of the administration server, for having access to this functionality. Further, in this case, the access provider does not need to take active part in the method or system according to the invention.

In whatever way the actual billing is implemented, a strength of the invention is that the user is charged without this interfering with the surfing experience (no login needed, no VISA card number needed, etc). At the same time, a content provider can be offered a simple way to control and bill the visitors of its site. This model provides an effective incentive to provide Internet content of high quality, as it is the only way to ensure a high number of visitors ready to pay for the access.

It is envisaged that considerable interest for the system will come from organizations of journalists, artists, photographers, etc, who will be offered a simple and economic way to gain revenue from providing their work to the Internet users.

According to a preferred embodiment of the invention, the IP address is associated with a user profile, defining in more detail what information said user is entitled to access. By making this profile available to the content provider, the contents can be further personalized, both in terms of which content providers may be accessed, and in terms of exactly what contents at a particular content provider may be accessed. For example, access may be limited to the headlines, or to a specific category of information.

The information in the user profile can be provided to the content provider by storing said user profile at the Access Provider, providing the administration server with information regarding which user profile is associated with a specific allocated IP address, and determining which user profile is associated with said extracted IP address.

It is possible, and fairly easy, for the Access Provider to keep track of what contents a subscriber wants to have access to, and storing this information. The administration server then has to be informed about which particular profile that is associated with each particular IP address. This is particularly important in the case of dial-up connections, where a user is allocated a different IP address at every connection occasion. When a user requests information from a content provider, the provider can use the information in the administration server to determine what information, if any, that the user is entitled to access.

This embodiment enables the Access Provider to charge the subscriber exactly for the contents he/she considers worth paying for. Continuing the analogy with the cable TV company, this corresponds to each TV subscriber selecting the channels he/she wants to have available, and paying a monthly fee depending on the selection made. Some TV channels are cheap (with less interesting/valuable contents), while other channels are expensive (considered to have desirable contents).

In the same way, an Internet user will, according to the above embodiment of the invention, be able to select which sites he/she desires to have access to, and even specify what contents from a particular provider. When the user tries to access a particular content provider, software in the content provider can automatically verify that the user has access to the site, and thereafter provide a web page to the user, possibly customized according to the profile.

The step of determining if said extracted IP address is comprised in said list of IP addresses can be performed at the content provider server, in which case the list of IP addresses is communicated from the administration server to the content provider server at predetermined times or on request. This enables the content provider of being provided with an updated list, which is especially important in the case where user profiles are associated with the IP addresses.

Another flexible way of performing the step of determining if said extracted IP address is comprised in said list of IP addresses is to make a request from the content provider server to the administration server, said request including the extracted IP address. This guarantees that the determination is always made according to the current list.

### Brief description of the drawings

These and other aspects of the invention will be apparent from the preferred embodiments more clearly described with reference to the appended drawings.
Fig 1 is a schematic view of a first embodiment of the invention implemented in a network.
Fig 2 is a schematic view of a second embodiment of the invention implemented in a network.
Fig 3 is a flowchart of an embodiment of the method according to the invention, from the administration server point of view.
Fig 4 is a flowchart of a first embodiment of the method according to the invention, from the administration server point of view.
Fig 5 is a flowchart of a second embodiment of the method according to the invention, from the administration server point of view.

### Detailed description of preferred embodiments

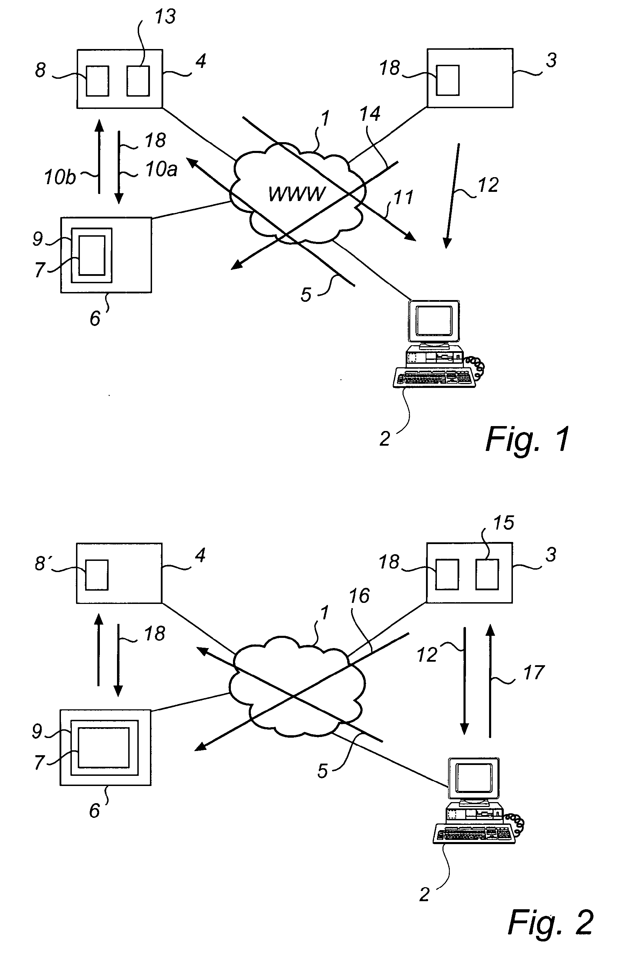

A first embodiment of the invention is illustrated in fig 1. The invention is generally applicable in a system where a user accesses information over a network 1 by connecting a client workstation 2 (such as a PC, a PDA a GPRS phone or any other type of device) to an access provider 3, in turn connected to the network. The access provider can be an Internet Service Provider, a GPRS access provider, or any other type of provider of network access services. The information (media contents, services, etc.) is stored on servers 4 operated by content providers, and these servers are also connected to the network 1. A user seeking information uses the client 2 to send a request 5 to specific content provider servers, typically by clicking on a link or inputting an http-address. The information, e.g. the contents of a web site, is then transferred to the client and displayed, streamed or downloaded to the user. The invention is related to a network based on the Internet Protocol (IP), typically the Internet, and thus each unit that is connected to the network, such as a content provider's server, or a user's client, has been allocated an IP address 12, uniquely identifying the unit on the network. This IP address is readily extractable from a user request.

The client's IP address 12 can be permanent (for example a company, having bough access to a permanent Internet connection from an ISP), or temporary (for example a dial-up connection to an ISP, where a different IP address is allocated at each connection occasion).

According to the invention, an administration server 6 is connected to the network 1, and is arranged to administrate and make available to the content providers a list 7 of predefined IP addresses. The purpose of this list is to define which IP addresses that are allocated to users entitled to have access to certain content in the network. The list 7 can be stored in e.g. a standard SQL database 19. The administration server can be a separate physical server, or be a software application implemented on an existing web server. Each content provider server is further provided with additional means 8, arranged to determine if the IP address of a user requesting information from the server, is included in the predefined list in the administration server. The means 8 can be a separate hardware unit, physically separated from the content provider web server, but may equally well be a software module implemented directly in the web server or any combination of software and hardware. The details of the means 8 (in the example assumed to be a software module in the content provider server) can be designed by the skilled man.

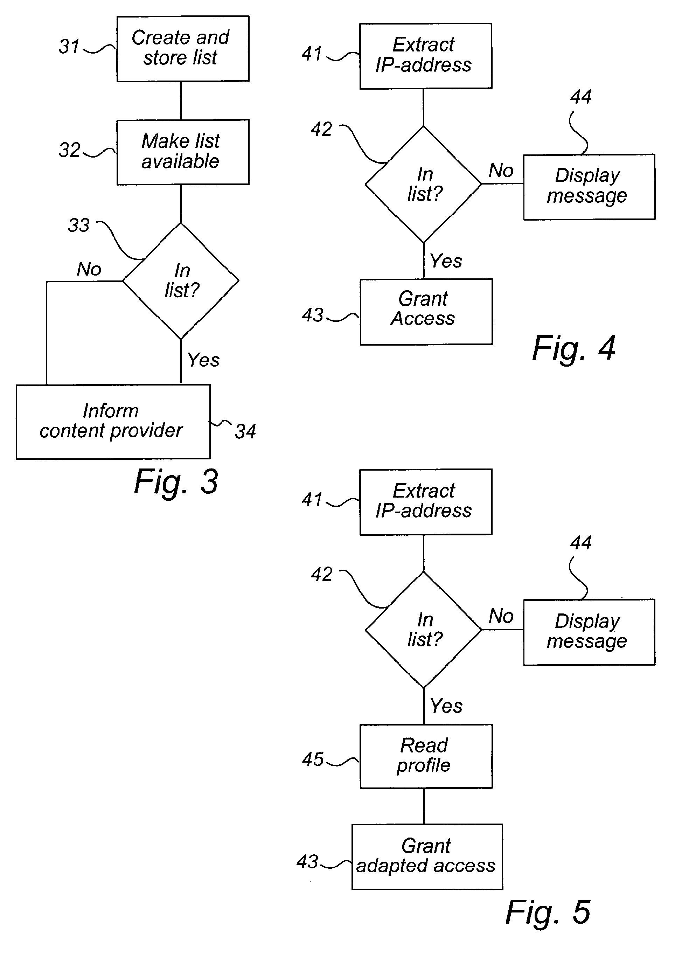

Fig 3 shows the function of the administration server. In step 31, the list 7 is created and stored in the database 19. The list is then (step 32) made available to the content provider via the network. To this end, there is an interface between the administration server 6 and the content provider, enabling the content provider to access the list 7 and to transmit information to the administration server 6. In step 33, the administration server determines if an IP address, extracted at the content provider server 4, is comprised in the list, and informs the content provider of the result.

Fig 4 shows the function of the means 8 connected to the content provider server 4. In step 41, the users allocated IP address 12 is extracted, and in step 42 it is determined if this address is comprised in the list, stored at the administration server.

In a first case, the software 8 regularly downloads an updated version of the list 7 from the administration server and stores it in a local memory 13. By performing this download sufficiently often, the software 8 will always have immediate access to an updated list. The IP address 12 of the user can then be extracted (step 41) from a user request 5, and compared (step 42) to the locally stored list using standard software components.

In a second case, the software 8 extracts (step 41) the IP address 12 from the user request, and sends a request 10a to the administration server 6, receiving in return information 10b regarding if the IP address is included in the list or not. The request 10a can for example result in an SQL query if an SQL database is implemented. In this case, the determination of whether an IP address is comprised in the list 7 is actually performed by the administration server (step 33). It is clear that the means 8, illustrated in figs 1 and 2 as part of the content provider, in fact is distributed between the content provider and the administration server.

If the extracted IP address is included in the list 7, the server software 8 will process the request, and transmit (step 43) the requested information 11 to the user client 2. If, however, the IP address is not found in the list, the software will inform the user in a suitable way (step 44), for example by transmitting a http-document informing the user that access is denied, and possibly suggesting how access can be gained.

According to a first embodiment, illustrated in fig 1 and fig 4, the predefined list includes all IP addresses handled by an ISP. These IP addresses can easily be communicated 14 to the administration server from the ISP. As a result, any user accessing the network through this particular ISP will be allocated an IP address in the list. This means that an ISP is either on the list or not, and this fact effectively determines the value the ISP can deliver to its customers. It should be noted that this is the case when a proxy system is utilized, where several users share the same allocated IP address. In such a system, it is not possible to identify individual users, but only what ISP or proxy they are using.

With a significant number of attractive content providers participating in the system, restricting access to their sites, an Internet user will probably choose one of the participating ISP:s. As access to a content server is determined by what ISP a user is connected to, the content server can, if a user is denied access, provide the user with a list of ISP:s providing access to the particular site.

The access is thus not differentiated between the customers of a particular ISP. However there may well be a differentiation between different ISP:s. The customers of one ISP may have complete access to a content server site, while customers of another ISP have restricted access. This can easily be obtained by a differentiated list in the administration server. In this case, the content server may provide users with information of the type "the following ISP:s will provide you with full access".

According to a second, more elaborate embodiment, illustrated in fig 2 and fig 5, an additional software component 15 is provided at the ISP 3. This software is arranged to handle a differentiation of different users, related to what contents they have access to. This information, preferably stored in a user specific profile 17, is associated with the IP address the particular user is allocated, and communicated 16 to the administration server 6. The database can preferably be updatable over an Internet interface, but other solutions may be equally efficient.

In the case of a permanent IP address, the software 15 only needs to update the information in the list if and when the user profile is altered, for example when a user agrees to pay a larger fee in order to have access to more/better quality contents.

In the case of a temporary IP address, the software 15 is active every time a user connects to the internet, and is allocated an IP address. Information 16 associating this IP address with the user profile of this particular user is then communicated to the administration server 6.

The server software 8' can in this case also be more elaborate making use of the user profiles associated with the IP addresses in the administration server. The software 8' in the content provider server can now not only determine if a user should have access to a particular site, but also read (step 45 in fig 4) the associated user profile and adapt the contents to the particular profile. One user may for instance have access only to the headlines, while another user may access the entire article. One user might not have access to copyright protected material, while another might have, etc.

The server software 8' can also enhance the information given to the user about granted access, for example highlighting the fact that more information would be available, if the user agrees to purchase this access from the ISP. A user with no access at all can just as in the previously described embodiment, be informed that access is denied, and provided with suggestions on how to gain access.

Billing of the user is effected from a ISP billing system 18. The fees charged will depend on the contents a user is entitled to access. In the first embodiment (fig 1), each ISP 3 would typically have a standard fee, corresponding in some way to the number of content providers its users can access.

In the preferred embodiment, the administration server 6 is arranged to monitor which users (actually which IP addresses) that access the contents on the server. This can be a simple counter based monitoring, establishing the number of times a user with a specific IP address has accessed a site. It can however also be more elaborate, including any number of information like duration of visit, number of clicks, time between visits, etc. This information can then be communicated to the ISP, to provide a base for an individual billing.

To this end, the server software 8, 8' is arranged to send, at each request from a user, information 18 to the administration server 6, comprising for example the request itself, the deduced IP address and the time. The administration database 7 is then arranged to store the information from the content servers. If possible the operator identity is determined from the IP address, and also stored in the database. The information in the database is primarily intended to be used for billing purposes, but other areas of use may develop.

The skilled man will realize that a number of modifications of the herein described embodiments are possible within the scope of the present invention. It is for example obvious that the network structure illustrated in the figures is very schematic, and does not intend to show the exact design of the network units. Servers may be redundant or comprise several separate physical units, systems such as billing are probably separated from the ISP web server, administration functions may be comprised in or shared with content providers, etc.

Also, the administration server database 7 may be designed in a suitable way, including any number of suitable fields which are deemed usable in the implemented system. Obviously, the list 7 can conversely include IP addresses that are not entitled to access, with the same end result.

Further, the client 2 may be provided with means (not showed) for directly accessing the administration server 6 and updating the list 7 with the presently allocated IP address.

## Claims

1. Method for controlling access of a user, having been allocated an IP address (12) from an Access Provider (3), to contents supplied by a content provider and stored on a server (4) connected to a network (1) such as the Internet, **characterized by**
extracting (41) said allocated IP address at the content provider server (4) when a user requests (5) information from the server,
determining (42) if said allocated IP address is comprised in a list (7) of predefined IP addresses, stored on an administration server (6) and made available to the content provider via the network (1), and
in response to the result granting the user access to said contents.

2. Method for controlling access of a user, having been allocated an IP address (12) from an Access Provider (3), to contents supplied by a content provider and stored on a server (4) connected to a network (1) such as the Internet, **characterized by**
storing (31) a list (7) of predefined accepted IP addresses on an administration server (6),
making (32) said list (7) available to the content provider via the network (1),
determining (33) if said allocated IP address, extracted at the content provider server (4), is comprised in said list (7), and communicating the result to the content provider.

3. Method according to claim 1 or 2, wherein the user is charged by the Access Provider based on which content provider servers (4) he is granted access to.

4. Method according to claim 3, wherein the Access Provider is charged by the proprietor of the administrative server (6) for comprising the IP-addresses of the Access Provider on said list.

5. Method according to claim 4, wherein the proprietor of the administration server (6) is charged by the content provider for making said contents available.

6. Method according to claim 3, wherein the Access Provider is charged by the content provider, for making said contents available to the Access Provider's users.

7. Method according to any of the preceding claims, wherein said IP address (12) is associated with a user profile (17), defining in more detail what information said user is entitled to access.

8. Method according to claim 7, further comprising
storing said user profile at the Access Provider (3),
providing the administration server (6) with information (16) regarding which user profile is associated with a specific allocated IP address, and
determining (45) which user profile is associated with said extracted IP address.

9. Method according to claims 1- 8, wherein the step (42) of determining if said extracted IP address (12) is comprised in said list (7) of IP addresses is performed at the content provider server (4), and wherein said list (7) of IP addresses is communicated from the administration server to the content provider server at predetermined times or on request.

10. Method according to claims 1- 8, wherein the step (33) of determining if said extracted IP address is comprised in said list of IP addresses is performed at the administration server (6), upon request from the content provider server, said request including the extracted IP address.

11. Method according to claims 1 - 10, wherein the user connects to the Internet by contacting said Access Provider and in response thereto is allocated a temporary IP address (dial-up Internet connection).

12. Method according to claims 1 - 10, wherein the user is allocated a permanent IP address from the Access Provider (permanent Internet connection).

13. System for controlling access of a user, having been allocated an IP address from an Access Provider (3), to contents supplied by a content provider and stored on a server (4) connected to a network (1) such as the Internet, **characterized by**
an administration server (6), arranged to store a list (7) of predefined accepted IP addresses, and to make said list available to the content provider via the network (1),
wherein the content provider server is connected to means (8), arranged to extract said allocated IP address (12) when a user requests information from the server, and to determine if said extracted IP address is comprised in said list of IP addresses, in which case the user is granted access to said contents.

14. System according to claim 13, further comprising means (18) for enabling the content provider to charge the user for accessing its contents, via the proprietor of the administration server (6) and the Access Provider (3).

15. System according to claim 13, wherein said IP address is associated with a user profile (17), defining in more detail what information said user is entitled to access.

16. System according to claim 15, wherein
the Access Provider (3) comprises means (15), arranged to store the user profile (17), and to provide the administration server with information (16) regarding which user profile (17) is associated with a specific allocated IP address (12), and wherein
the means (8) is arranged to determine which user profile (17) is associated with said allocated IP address (12), and to provide the user with contents adapted for said profile.
